Europäisches Patentamt

European Patent Office

Office européen des brevets

(19)

(11) Publication number: **0 157 070**
A1

(12) # EUROPEAN PATENT APPLICATION

(21) Application number: **84850104.5**

(22) Date of filing: **02.04.84**

(51) Int. Cl.⁴: **H 02 J 7/10,** G 01 R 31/36

(30) Priority: **01.10.83 EP 83109831**

(71) Applicant: **Bertil Ekberg & Co., Götagatan 22, S-50 258 Boras (SE)**

(43) Date of publication of application: **09.10.85 Bulletin 85/41**

(72) Inventor: **Öjelid, Göran, Schillerstrasse 42, D-7800 Freiburg IBR (DE)**

(84) Designated Contracting States: **AT BE CH FR GB IT LI NL SE**

(74) Representative: **Mossmark, Anders, Patentbyran WEST-PATENT AB Stora Nygatan 15, S-411 08 Göteborg (SE)**

(54) **Charging device.**

(57) Charging device for electrical accumulators, consisting of a transformer which is provided for the supply of charging current at a voltage, the effective value of which amounts to at least twice the voltage over said accumulator, over at least one thyristor (2). The conductivity of the thyristor is controlled by means of at least one transistor (15) in a negative dependence of the charging current. By means of a Zener diode (19) the thyristor is controlled in a negative dependence of the accumulator voltage as soon as this voltage exceeds a determined threshold value.

## Charging device

The present invention relates to charging devices for electrical accumulator batteries, especially of the type being charged by means of a pulsating current.

Characteristic for prior known battery charges is usually that charging current at the beginning of a charging cycle is substantially limited by the internal resistance of the device and will possibly be regulated by means of interruptions from a built in temperature limiter. Not until in a later phase of the process the battery limits the charging current by means of the increasing electric potential difference of the electrolytic cells.

An object of the present invention is to maintain the charging current constant up to the attainment of more than 90 percentage of full charge and this also independent of variations in the main voltage.

A further object of the present invention is to provide for a continous measurement of the voltage of the accumulator battery during the charging with such a high accuracy, that the hitherto usual measurement of the acid weight for determination of the charging condition can be replaced therewith.

Another object of the invention is to enable charging of several accumulator batteries from one common charging device, but still independent from each other by means of an automatically operating electronic switch.

The present invention is characterized by a transformer which is provided to supply charging current over at least one thyristor at a voltage, the effective value of which amounts to at least twice the voltage of the accumulator. The conductivity of the thyristor will by means of at least one transistor be regulated in a negative dependence of the charging current and by means of a zener diode be regulated in negative dependence of the accumulator voltage, when the accumulator voltage exceeds a determined threshold value.

The present invention will be described as follows with reference to the accompanying drawing on which

Fig. 1 shows a circuit diagram for a charging device according to the invention which stabilizes and interrupts the charging current,

Fig. 2 shows a device for an accurate measurement of voltage and

Fig. 3 shows a curcuit diagram for an electronic switch with a possibility for charge of five accumulators from one single charging device.

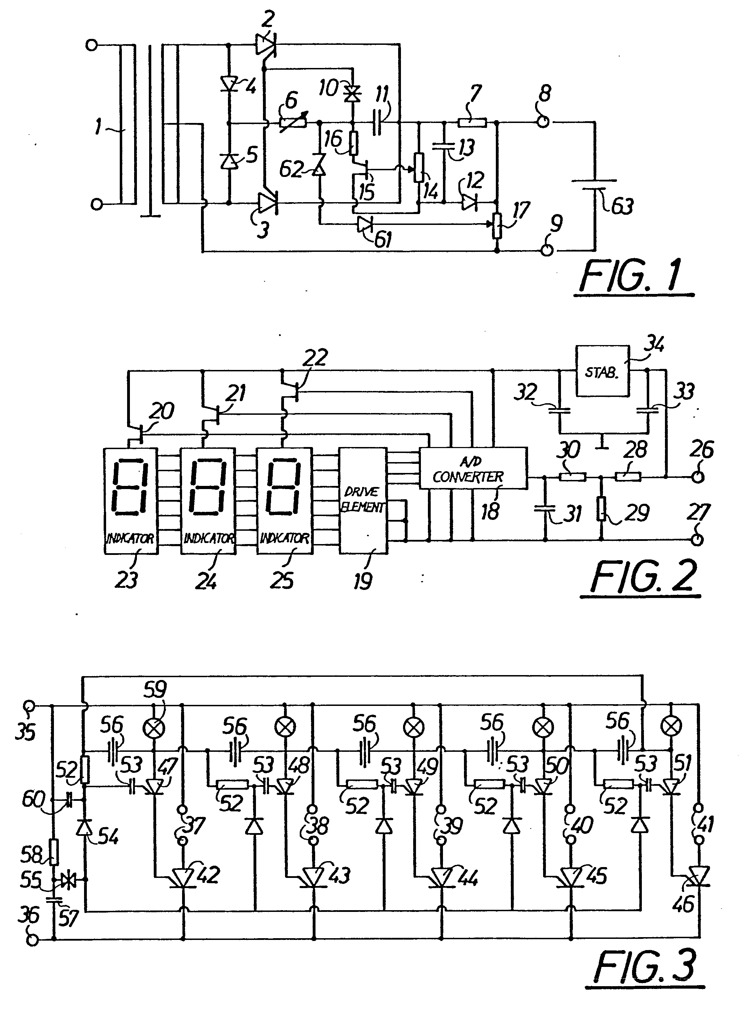

Fig. 1 shows a transformer 1 the secondary winding of which has a midpoint connection and is connected to two thyristors 2 och 3 and two diodes 4 and 5. The effective value of the operating voltage of the secondary winding amounts to approximately four times the desired accumulator voltage. The two thyristors are over a resistance 7 commonly connected to a first output terminal 8. A second output terminal 9 is connected to the midpoint connection of the transformer 1. A trigger element 10 is connected to a capacitor 11 and to the diodes 4 and 5 over an adjustable resistor 6. A further diode 12 connects a capacitor 13 with the resistor 7. A potentiometer 14 is connected in parallel with the capacitor 13 and connected with a transistor 15, the emitter of which is connected to the capacitor 11 over a resistor 16. A second potentiometer 17, which is connected with the two output terminals 8, 9 is also connected to the capacitor 11 over a diode 61 and a Zener diode 62.

The device operates in the following manner:

When the transformer 1 is supplied with alternating voltage, the transformer supplies alternately over the diodes 4 and 5 respectively and a common adjustable resistor 6 a charging current to the capacitor 11. Depending on the setting of the adjustable resistor the capacitor in this way reaches sooner or later during each half wave of the current the voltage value, where the trigger element 10 results in a discharge of the capacitor over the thyristors 2 and 3. Then always one of the two thyristors will be conducting and supplies over the resistor 7 charging current to an accumulator battery 63, which is connected to the output terminals 8, 9. The voltage which then arises over the resistor 7 charges over the diodes 12 the capacitor 13 to a voltage corresponding to the charging current. This voltage is put out over the potentiometer 14 and determines in this way the conductivity of the transistor 15 so, that also the conductivity increases upon increasing voltage. As the transistor 15 can discharge the capacitor 11 over the resistor 16, the means value of the charging current will in a simple way be maintained constant by the effect that the ignition point of the trigger element 10 will be delayed upon a tendency to increasing current. Substantially independent of this control for the purpose of stabilisation a current control, controlled by the voltage over the output terminals 8, 9 takes place over the Zener diode 62, potentiometer 17 and the diode 61. This control involves that the capacitor 11 will be discharged over said elements as soon as the voltage over the output terminals reaches a value which is set by means of the potentiometer 17. This means that the charging current upon attaining the set, desired terminal voltage of the accumulator battery decreases steeply and passes over to a strength adapted for compensating charge. Important is that by means of the present device the control takes place in dependence of the voltage over the output terminals immediately before the accompanying current pulse.

The device for accurate measurement of voltage, shown in Fig. 2, includes an analogous-digital converter 18 known per se, which over a drive element 19 and transistors 20, 21, 22 is arranged to control three LED-indicator elements 23, 24, 25. The control is accomplished with a high accuracy by the voltage supplied over the input terminals 26, 27, which voltage is applied to the analoguos-digital converter via a voltage divider 28, 29 and an integration circuit 30, 31. The voltage over the input terminals provides also for the supply of current to the measuring instrument by forming a constant voltage of a suitable size over two capacitors 32, 33 and a voltage stabilizer 34. The instrument shows in a digital form and with an accuracy of approximately 0,5 % the applied voltage over the input terminals and is suitable for the watch over an accumulator battery being charged by means of a device according to Fig. 1. The high accuracy and comfortable display forms a substitute for the complicated measurement of acid weight which hitherto has been utilized for the test of the charging condition of the battery, said substitute being sufficient for most requirements.

The electronic switch shown in Fig. 3 is a sequence switch having input terminals 35 and 36 and five pairs of output terminals 37, 38, 39, 40, 41 which are suitable for the connection of five accumulator batteries. The sequence switch includes five thyristors 42, 43, 44, 45, 46, dimensioned for charging current to one accumulator battery. Each one of the thyristors are so connected with an own, smaller thyristor 47, 48, 49, 50 and 51 respectively, that the smaller thyristor can ignite the larger thyristor. The small thyristors are over five identical RC-circuits 52, 53 connected with each other to a ring. The five RC-circuits are over five identical diodes 54 connected with a trigger element 55. At the anode side the five small thyristors are connected with each other over five bi-polar capacitors 56. The trigger element is connected to a capacitor 57 and a charging resistor 58. Five identical lamps 59 connect the small thyristors with one of the input terminals 35. The capacitor 60 completes the device.

The function is as follows:

When a pulsating direct current from for example a charging device according to Fig. 1 is fed to the input terminals 35, 36, the thyristor 47 over the capacitor 60 receives an ignition impulse and ignites its inherent thyristor 42 so, that an accumulator connected to the output terminals 37 will be in this way connected to the input terminals 35, 36 for the purpose of charging. Simultanously a charge of the capacitor 57 is started over the resistor 58 and results after a certain time in that an ignition impulse over the trigger element 55 is fed to the thyristor 48 over the elements 53, 54 controlling the ignition of the thyristor 48. That no ignition impulse simultanously is issued to the other small thyristors is provided for by the fact that the resistors 52 maintains all capacitors 53 charged, except for exactly the present one. When the small thyristor 48 now ignites, it will simultanously put off the small thyristor 47 by reversed polation of the capacitor 56 which is connected to both of said thyristors. After that only the thyristors 43 and 48 are consequently conducting and allow charging of an accumulator battery connected to the output terminals 38. The process as described repeats itself at the accompanying ignition impulse from the trigger element 58, but then the process relates to the thyristors 48 and 49. Each new ignition impulse displaces consequently the connection of the input terminals to the next pair of output terminals. As all small thyristors are connected to each other, the process from the pair of output terminals 41 returns to the pair of output terminals 37 for a start of a new cycle.

If a pair of output terminals have no connection to an accumulator battery, the accompanying ignition pulse comes considerably faster, as the input voltage which is nearly unloaded, will faster charge the capacitor 57. By means of a suitable dimension of the trigger element 55, a capacitor 61 and a resistor 62 the displacement can from an unloaded pair of clamps easily take place very rapidly. Thereby also merely one single accumulator battery can be charged by means of the device without any remarkable loss of charging time. The lamps 59 operates as current limitors for the small thyristors and are simultaneously indicators for the switching process. The Zener diode can be replaced by a component with equivalent function.

0157070

Claims:

1. Charging device for electrical accumulators, characterized by a transformer (1) being provided to supply said charging current at a voltage, the effective value of which amounts to at least twice the accumulator voltage, over at least one thyristor (2), said conductivity of the thyristor being controlled by means of at least one transistor (15) in a negative dependence of the charging current and by means of a Zener diode (19) or similar in a negative dependence of said accumulator voltage, as soon as this voltage exceeds a determined threshold value.

2. Charging device according to claim 1, characterized therein that a voltage meter with high accuracy and digital display is connected to the accumulator connections, so that it is provided to continuosly display the voltage of the accumulator.

3. Charging device according to claim 1 or 2, characterized therein that an electronic sequence switch is provided to connect output terminals connections of the charging device with a plurality of pairs of terminals for accumulators automatically and in a predetermined sequence.

0157070

FIG. 1

FIG. 2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 031 451 (P.H.GORDON) <br> * Column 2, line 14 - column 5, line 68; figure * | 1 | H 02 J 7/10 <br> G 01 R 31/36 |
| Y | | 2,3 | |
| Y | FR-A-2 486 727 (DAV EQUIPEMENT) <br> * Page 2, line 22 - page 4, line 28; figure * | 2 | |
| Y | US-A-4 016 474 (W.B.MASON) <br> * Column 2, line 27 - column 3, line 41; column 5, lines 14-26; figure 1 * | 3 | |
| A | | 2 | |
| A | US-A-3 854 082 (J.S.NASBY et al.) <br> * Column 4, line 32 - column 7, line 25; figure 3 * | 1 | H 02 J 7 <br> G 01 R 31 |
| A | GB-A-2 045 020 (LUCAS INDUSTRIES) <br> * Page 1, lines 51-128; page 2, lines 9-20; figures 1,3 * | 1 | |

TECHNICAL FIELDS SEARCHED (Int. Cl.4)

The present search report has been drawn up for all claims

| Place of search | Date of completion of the search | Examiner |
|---|---|---|
| THE HAGUE | 20-06-1985 | POINT A.G.F. |